## Europäisches Patentamt
## European Patent Office
## Office européen des brevets

(19)

(11) Veröffentlichungsnummer: **0 250 642**
**B1**

(12)

# EUROPÄISCHE PATENTSCHRIFT

(45) Veröffentlichungstag der Patentschrift:
**17.01.90**

(51) Int. Cl.⁴: **B29D 31/00, F16J 15/32**

(21) Anmeldenummer: 86115986.1

(22) Anmeldetag: **18.11.86**

(54) Verfahren zur Herstellung eines Dichtringes.

(30) Priorität: 25.06.86 DE 3621242

(43) Veröffentlichungstag der Anmeldung:
**07.01.88 Patentblatt 88/1**

(45) Bekanntmachung des Hinweises auf die Patenterteilung:
**17.01.90 Patentblatt 90/3**

(84) Benannte Vertragsstaaten:
**AT BE CH DE FR GB IT LI NL SE**

(56) Entgegenhaltungen:
**DE-A- 2 551 525**
**DE-A- 3 246 152**
**FR-A- 2 335 327**
**GB-A- 1 051 756**

**VDI-ZEITUNG, Band 118, Nr. 5, März 1976,
Seiten 225-228; B. BECKER: "Abdichtung rotierender
Wellen durch Radialwellendichtringe"
PATENT ABSTRACTS OF JAPAN, Band. 8,
Nr. 83 (M-290)[1520], 17. April 1984; &
JP-A-58 225 272 (TOKUSHIYU KOUSAKU
K.K.) 27-12-1983
E. SCHMID et al.: "Handbuch der
Dichtungstechnik", 1981, Seiten 316-321, Expert Verlag,
Grafenau, DE; "Konstruktive Hauptmerkmale -
Mechanismus des 'Drall-Wellendichtringes'"**

(73) Patentinhaber: **Firma Carl Freudenberg, Höhnerweg 4,
D-6940 Weinheim/Bergstrasse(DE)**

(72) Erfinder: **Graf, Günter, Dr., Grundelbachstrasse 112 c,
D-6940 Weinheim(DE)**
Erfinder: **Gross, Heinz, Schulstrasse 12,
D-6943 Birkenau(DE)**
Erfinder: **Sponagel, Stefan, Dr. rer. nat., Bannelsberg 26,
D-6149 Rimbach(DE)**

(74) Vertreter: **Weissenfeld-Richters, Helga, Dr.,
Höhnerweg 2, D-6940 Weinheim/Bergstrasse(DE)**

## Beschreibung

Die Erfindung betrifft ein Verfahren zur Herstellung eines Dichtringes mit einer Dichtlippe, bei dem der die Dichtlippe bildende Werkstoff in plastisch verformbarem Zustand durch eine Ringdüse extrudiert und vor oder nach seiner Verfestigung zur Erzeugung einer schlauchförmigen Hülse abgelängt und im Bereich der in dem fertigen Dichtring die dynamische Abdichtung bewirkenden Zone mit hydrodynamisch wirkenden Rückförderelementen versehen wird, bei dem die Hülse zur Bildung eines Flansches mit ihrem vorderen Ende auf einen sich in seinem Durchmesser stetig erweiternden Formling axial aufgeschoben und mit dem Flansch in einem Versteifungsring festgelegt wird.

Das vorgenannte Verfahren ist aus der DE-PS 3 246 152 bekannt. Die hydrodynamisch wirkenden Rückförderelemente werden dabei nach der Verfestigung des die Dichtlippe bildenden Werkstoffes angebracht, was einen separaten Arbeitsschritt erfordert.

Aus PAJP, Vol. 8, Number 83 (M-290) 1520 April 17, 1984 ist ein Radialwellendichtring bekannt, bei dem in der Dichtlippe eine Substanz mit gerichteten Eigenschaften enthalten ist, die eine axial gerichtete Förderwirkung während der bestimmungsgemäßen Verwendung bewirkt. Über das bei der Herstellung der Dichtung zur Anwendung gelangende Verfahren wird nichts ausgesagt.

Aus der VDI-Zeitung 118 (1976, Nr. 5 – März (I)) B. Becker, "Abdichtung rotierender Wellen durch Radialwellendichtringe" ist es bekannt, auf der Oberfläche einer Dichtlippe hydrodynamisch wirkende Rückförderelemente auf irgendeine Weise anzubringen, beispielsweise durch eine schleifende oder prägende Behandlung der Oberfläche. Eine Modifizierung der inneren Molekularstruktur des die Dichtlippe bildenden Werkstoffkörpers wird nicht erwähnt.

Aus der DE-OS 2 551 525 ist es bekannt, ein faserverstärktes Rohr durch Extrudieren des polymeren Werkstoffes zu erzeugen, bei dem in den verwendeten Werkstoff ein Gehalt an Kurzfasern eingemischt wird und bei dem in dem Werkstoff während seines Durchtritts durch die Ringdüse des Extruders durch relatives Verdrehen der den Austrittsschlitz der Ringdüse innen- und außenseitig begrenzenden Flächen eine schraubenförmige Strömung erzeugt wird. Ein Hinweis auf die Erzeugung eines Radialwellendichtringes mit hydrodynamischen Eigenschaften ist nicht enthalten.

Der Erfindung liegt die Aufgabe zugrunde, das Verfahren der eingangs genannten Art derart weiterzuentwickeln, daß die Anwendung eines separaten Arbeitsschrittes bei der Anformung der hydrodynamisch wirkenden Rückförderelemente entbehrlich ist.

Diese Aufgabe wird erfindungsgemäß dadurch gelöst, daß zur Bildung der Rückförderelemente in den die Dichtlippe bildenden Werkstoff während seines Durchtretens durch die Ringdüse durch relatives Verdrehen der den Austrittsschlitz der Ringdüse innen- und außenseitig begrenzenden Flächen eine schraubenförmige Strömung erzeugt wird. Die Erzeugung hydrodynamisch wirksamer Rückförderelemente erfordert hierdurch keinen sekundären Aufwand. Zugleich gewährleistet das erfindungsgemäße Verfahren eine größtmögliche Kontinuität hinsichtlich der gegenständlichen Ausbildung der hydrodynamisch wirkenden Rückförderelemente bei einer jeden erzeugten Dichtungseinheit.

Die hydrodynamisch wirkenden Rückförderelemente werden durch relatives Verdrehen der den Austrittsschlitz der Ringdüse außen- und innenseitig begrenzenden Flächen erzeugt. Neben einer einfachen Durchführbarkeit ergibt sich hierdurch vor allem der Vorteil der Entstehung einer schraubenförmigen Strömung des Dichtungswerkstoffes während seines Austretens aus der Ringdüse, was nach dessen Verfestigung eine entsprechende molekulare Orientierung zur Folge hat. Diese stimmt richtungsmäßig überein mit der Richtung von eventuell in die Außen- und die Innenseite eingeformten Nuten und/oder Rippen, wodurch die Abriebfestigkeit eine deutliche Steigerung erfährt. Dichtringe mit einer erfindungsgemäß erzeugten Dichtlippe zeichnen sich daher in aller Regel durch eine wesentlich verbesserte Gebrauchsdauer aus.

Eine weitere Verbesserung der Abriebfestigkeit läßt sich erhalten, wenn ein Dichtungswerkstoff mit einem Gehalt an Kurzfasern verwendet wird. Diese erfahren ebenso wie die Molekülketten des Dichtungswerkstoffes eine der Schraubenströmung entsprechende Richtungsorientierung, wodurch sie nach der Verfestigung des Dichtungswerkstoffes in gestreckter Form in denselben eingebettet sind. Der durch die Einlagerung der Kurzfasern erzielte Verfestigungseffekt ist daher erheblich.

Die Kurzfasern können metallischen, synthetischen und/oder natürlichen Ursprungs sein. Kurzfasern metallischen Ursprunges bewirken in aller Regel eine deutliche Steigerung der Abriebbeständigkeit der Dichtlippe, was besonders in Hinblick auf deren Langlebigkeit von großem Vorteil ist.

Gelangen demgegenüber Kurzfasern zur Anwendung, deren Abriebbeständigkeit geringer ist als diejenige des sie umschließenden Dichtungswerkstoffes, dann führt der natürliche, betriebsbedingt im Bereich der Dichtlippe auftretende Verschleiß zu einer bevorzugten Herauslösung von deren Oberfläche tangierenden Faserbetandteilen unter gleichzeitiger Bildung von Schmierstofftaschen. Der weitere Verschleiß ist dadurch bei einer solchen Ausbildung deutlich reduziert.

Das erfindungsgemäße Verfahren wird nachfolgend anhand der in der Anlage beigefügten Zeichnung weiter erläutert.

Die Zeichnung zeigt in längsgeschnittener Darstellung eine beispielhafte Ausführung eines Spritzkopfes, bei der die den Austrittsschlitz außen- und innenseitig begrenzenden Flächen relativ zueinander verdrehbar sind. In dem extrudierten Dichtungswerkstoff baut sich dadurch während seines Austretens aus der Ringdüse eine schraubenförmige Strömung auf, die auch bei Verwendung glatter Begrenzungsflächen der Ringdüse eine mikroskopisch feine Fältelung der Oberflächen bewirkt, welche sich schräg zur Austrittsrichtung erstreckt.

Der Winkel ist von der Austrittsgeschwindigkeit und von der Geschwindigkeit der relativen Verdrehung der die Ringdüse begrenzenden Flächen abhängig. Er läßt sich ohne besondere Schwierigkeiten auf einen Wert bestimmter Größe einstellen.

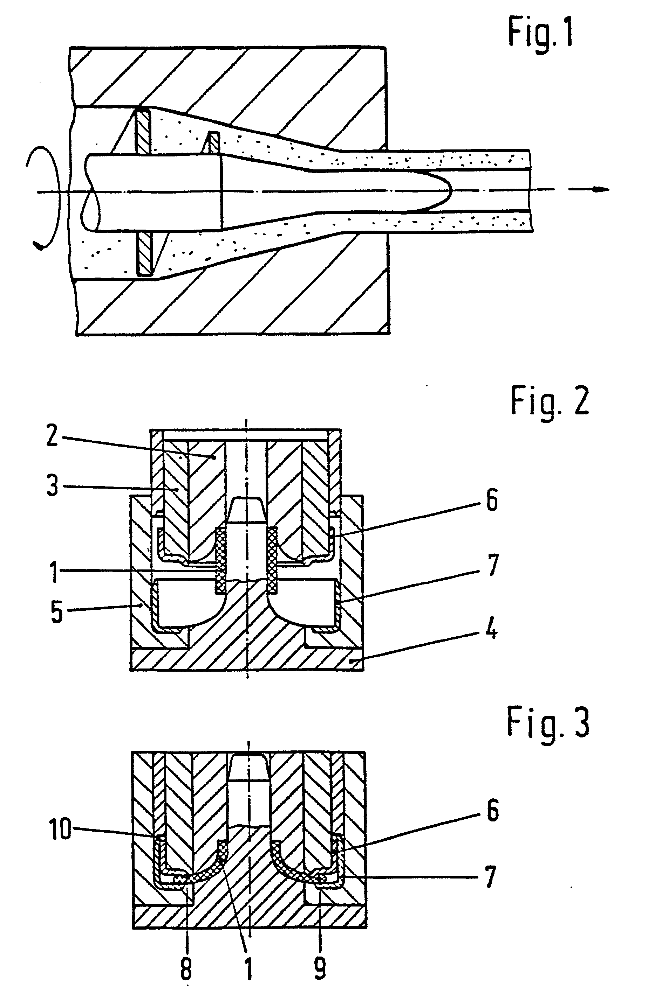

Der aus der Ringdüse in endloser Form und in Gestalt eines Schlauches austretende, noch plastisch formbare Dichtungswerkstoff wird anschließend verfestigt und in Teilabschnitte endlicher Größe zerlegt. Diese haben jeweils eine hülsenförmige Gestalt und werden in der in Figur 2 gezeigten Weise in ein Montagewerkzeug eingesetzt. Das Montagewerkzeug besteht aus dem Werkzeugoberteil 2 mit dem taktabhängig vorschiebbaren Schließer 3 und dem Werkzeugunterteil 4 mit dem unabhängig davon beweglichen Auswerfer 5. Der Schließer nimmt relativ zu dem Werkzeugoberteil eine rückverlagerte Position ein und trägt den lose aufgesteckten Innenring 6 den aufnehmenden Gehäuses.

In den Auswerfer ist der zugehörige Versteifungsring 7 des Gehäuses eingelegt. Das Montagewerkzeug ist damit fertig vorbereitet für die Umformung des hülsenförmigen Schlauchabschnittes 1 und dessen gegenseitige Verbindung mit dem Innenring 6 und dem Versteifungsring 7 des aus Stahlblech bestehenden Gehäuses. Der diesbezügliche Arbeitsschritt wird durch eine co-axiale Gegeneinanderbewegung des Werkzeugoberteiles gegen das Werkzeugunterteil 4 eingeleitet. Der säulenförmige Hohlzylinder 1 erfährt dadurch eine allmähliche, trompetenartige Aufweitung seines unteren Bereiches, die ihren Abschluß findet in der Ausbildung eines zwischen den radial nach innen weisenden Schenkeln des Innenringes 6 und des Versteifungsringes 7 angeordneten Flansches 9. Im nächstfolgenden Arbeitsschritt folgt der Schließer 3 der vorausgegangenen Bewegung des Werkzeugoberteiles 2, wodurch der mit einem unlaufenden Wulst versehene Innenring 6 in axialer Richtung an den Flansch 9 angepreßt wird. Eine mechanisch stabile und flüssigkeitsdichte Festlegung des Flansches in dem Gehäuse ist hiervon die Folge. Die gegenseitige Zuordnung erfährt eine dauerhafte Stabilisierung durch das gleichzeitige oder nachfolgende Umbördeln des axial über den Innenring 6 überstehenden Endes des Versteifungsringes 7 wie in Figur 3 gezeigt. Das Werkzeug kann danach geöffnet werden, der Wellendichtring kann entnommen und seiner bestimmungsgemäßen Verwendung zugeführt werden. Er weist im Bereich der Innenseite eine mikroskopisch feine, mit bloßem Auge nicht ohne weiteres erkennbare Fältelung auf, die mit der axialen Richtung des Dichtringes einen spitzen Winkel einschließt. Ein vollkommen leckagefreier Lauf und eine deutlich vergrößerte Gebrauchsdauer in bezug auf Ausführungen, bei denen die hydrodynamisch wirkenden Rückförderelemente spanabhebend oder durch eine senkrechte Verpressung der Oberfläche der Dichtlippe mit einem Prägewerkzeug erzeugt worden sind, treten deutlich in Erscheinung.

## Patentansprüche

1. Verfahren zur Herstellung eines Dichtringes mit einer Dichtlippe, bei dem der die Dichtlippe bildende Werkstoff in plastisch verformbarem Zustand durch eine Ringdüse extrudiert und vor oder nach der Verfestigung zur Bildung einer schlauchförmigen Hülse abgelängt und im Bereich der in dem fertigen Dichtring die dynamische Abdichtung bewirkende Zone mit hydrodynamisch wirkenden Rückförderelementen versehen wird, bei dem die Hülse zur Bildung eines Flansches an ihrem vorderen Ende axial auf einen sich in seinem Durchmesser stetig erweiternden Formling aufgeschoben und mit dem Flansch in einem Versteifungsring festgelegt wird, dadurch gekennzeichnet, daß zur Bildung der Rückförderelemente in dem die Dichtlippe bildenden Werkstoff während dessen Durchtretens durch die Ringdüse durch relatives Verdrehen der den Austrittsschlitz der Ringdüse innen- und außenseitig begrenzenden Flächen eine schraubenförmige Strömung erzeugt wird.

2. Verfahren nach Anspruch 1, dadurch gekennzeichnet, daß in dem Werkstoff Kurzfasern eingebettet und beim Durchtreten des Werkstoffes durch die Ringdüse der schraubenförmigen Strömung entsprechend orientiert werden.

3. Verfahren nach Anspruch 1 bis 2, dadurch gekennzeichnet, daß der Werkstoff zur Erzeugung einer mikroskopisch feinen Fältelung der Oberflächen der daraus gebildeten Hülse durch eine Ringdüse extrudiert wird, bei der die den Austrittsschlitz begrenzenden Flächen glatt gestaltet sind.

## Claims

1. A method for making a sealing ring with a sealing lip, in which the material forming the sealing lip is extruded in the plastically deformable state through an annular die and cut to length prior to or following solidification to form a tubular sleeve and provided in the region of the zone effecting the dynamic sealing in the finished sealing ring with hydrodynamically acting return elements, in which to form a flange at its forward end the sleeve is pushed axially onto a moulding of constantly widening diameter and fixed by the flange in a reinforcing ring, characterized in that, to form the return elements, a helical flow is generated in the material forming the sealing lip during its passage through the annular die by relative rotation of the surfaces bounding the outlet slot of the annular die on the inside and outside.

2. A method according to Claim 1, characterized in that chopped fibres are embedded in the material and are oriented in accordance with the helical flow as the material passes through the annular die.

3. A method according to any of Claims 1 to 2, characterised in that, in order to generate a microscopically fine folding of the surfaces of the sleeve formed therefrom, the material is extruded through an annular die in which the surfaces bounding the outlet slot are of smooth design.

## Revendications

1. Procédé de fabrication d'une bague d'étanchéité avec une lèvre d'étanchéité, dans lequel le matériau constituant la lèvre d'étanchéité est extrudé à l'état plastiquement déformable à travers une busette annulaire et est transformé, avant ou après son durcissement, en une douille en forme de tuyau flexible et est pourvu, dans la zone d'étanchéité dynamique de la bague d'étanchéité terminée, d'éléments de renvoi à action hydrodynamique, dans lequel la douille est insérée axialement sur une pièce de forme à diamètre augmentant continuellement afin de former une bride à son extrémité antérieure et est fixée avec la douille dans une bague de renfort, caractérisé en ce que, pour former les éléments de renvoi, on crée dans le matériau constituant la lèvre d'étanchéité un écoulement hélicoïdal pendant le passage de celui-ci à travers la busette annulaire, grâce à une rotation relative des surfaces délimitant intérieurement et extérieurement la fente de sortie de la busette annulaire.

2. Procédé selon la revendication 1, caractérisé en ce que des fibres courtes sont incorporées dans le matériau et qu'elles subissent une orientation correspondant à l'écoulement hélicoïdal au cours du passage du matériau.

3. Procédé selon les revendications 1 et 2, caractérisé en ce que le matériau est extrudé à travers une busette annulaire pour obtenir un plissement fin et microscopique des surfaces de la douille ainsi obtenue, alors que les surfaces délimitant la fente de sortie sont lisses.

EP 0 250 642 B1

Fig.1

Fig. 2

Fig. 3